# DEMANDE DE BREVET EUROPEEN

(11) **EP 0 808 576 A1**
(43) Date de publication de la demande: **26.11.1997**
(21) Numéro de dépôt: 96201350.4
(22) Date de dépôt: 21.05.1996
(51) Int. Cl.: A23G 9/28, A23G 9/20, A23G 9/02

(54) **Article de confiserie glacée contenant des inclusions et procédé de fabrication**

(71) Demandeur: SOCIETE DES PRODUITS NESTLE S.A., 1800 Vevey (CH)
(72) Inventeur: Fayard, Gilles, 1052 Le Mont S/Lausanne (CH); Fiaux, Martine, 1800 Vevey (CH)
(74) Mandataire: Archambault, Jean

(57) **Abrégé**

On fabrique des articles de confiserie glacée composites contenant des inclusions, en formant des boudins de fourrage central entourés d'un manchon de composition glacée par co-extrusion à une température de composition glacée inférieure ou égale à -8°C, puis l'on transforme lesdits boudins en une masse de composition glacée incorporant lesdites inclusions par enroulement ou repliement de boudin sur lui-même.

Le fourrage est injecté par le conduit (11) au coeur de la veine de composition glacée sortant de l'extrudeur au moyen d'une buse de co-extrusion (12) qui peut être mobile ou statique.

## Description

La présente invention a trait aux articles de confiserie glacée composites comprenant des inclusions distinctes de fourrage dans la masse d'une composition glacée.

On sait incorporer et répartir uniformément des morceaux, par exemple de fruits confits ou secs, dans une masse de composition glacée, pour remplir des pots ou des barquettes dans la fabrication des portions familiales ou vracs. Le dispositif décrit dans DE-A-3521612, par exemple, permet la distribution uniforme de morceaux déjà formés d'une certaine taille dans une veine de crème glacée, depuis une trémie à l'aide d'un tambour rotatif à pales rétractables s'appuyant contre une paroi cylindrique dont le rôle est de charger une quantité constante de morceaux dans un secteur du tambour et de la répartir uniformément dans le flux de crème glacée.

Dans US-A-3014437, par exemple, on co-extrude sous forme de boudins des masses différentes de produits plastiques telles que des masses de crème glacée de parfums différents, puis on les entortille en leur imprimant un mouvement rotatif à l'aide d'une pale tournante en forme de papillon. Un des produits plastiques peut être du fondant.

Le but de la présente invention est de doser dans une masse de composition glacée des inclusions, notamment de composition, de couleur et d'arôme différents de ceux de la composition glacée et de les répartir de manière aléatoire dans la masse, de sorte qu'il y ait une séparation nette, de préférence contrastée, des inclusions et de la composition glacée et que les inclusions ne se regroupent pas par gravité, par exemple au fond d'un contenant lors de son remplissage.

L'article selon l'invention est caractérisé par le fait qu'il comprend une masse de composition glacée et un fourrage sous forme d'inclusions stabilisées et réparties de manière aléatoire dans ladite masse de composition glacée et que les inclusions proviennent de la co-extrusion d'un fourrage central liquide pompable et d'une composition glacée extrudable à une température inférieure ou égale à -8° C.

Selon l'invention, on entend par "composition glacée" une crème glacée ou un sorbet, plus ou moins aéré ou foisonné ou encore une mousse culinaire glacée, plus ou moins foisonnée.

Dans le contexte de l'invention, un fourrage est constitué d'une composition aqueuse ou grasse, dont la teneur en matière sèche est de préférence 28 à 80 % en poids, contenant un sucre.

On peut utiliser comme sucre du saccharose cristallisé, des polysaccharides, notamment un sirop de glucose, du sucre cuit, du sucre inverti, une maltodextrine, notamment à équivalent dextrose élevé, par exemple environ 100.

Le fourrage peut être constitué d'une purée de fruit ou de légume, de préférence pure, c'est à dire sans additif. Le cas échéant, le fourrage peut contenir une quantité minimale, bien inférieure à ce qui est utilisé habituellement, d'un gélifiant ou épaississant tel que, par exemple une gomme, une pectine ou une gélatine.

Ce peut être du miel, du caramel, de la purée de fruit. Le fourrage peut avoir été préparé à partir d'une pâte de fruit sec, de praliné, de nougat, de nougatine. Il peut contenir des arômes et colorants, par exemple de chocolat, de café, de fruits et le cas échéant des agents conservateurs.

Un tel fourrage peut contenir des petites inclusions telles que, par exemple des éclats de chocolat ou de fruits secs.

Il peut se présenter sous la forme d'un fondant ou d'une pâte de composition grasse, le cas échéant aérée, par exemple une mousse au fruit ou au chocolat.

Selon sa nature et sa composition, le fourrage conduira à des inclusions solides plus ou moins dures ou liquides plus ou moins visqueuses dans la masse de composition glacée. Ce qui est important, c'est qu'il soit pompable et puisse cheminer vers la filière de sortie.

L'invention concerne également un procédé de fabrication de composition glacée contenant des inclusions, caractérisé par le fait que l'on forme des boudins de fourrage central entourés d'un manchon de composition glacée par co-extrusion à une température de composition glacée inférieure ou égale à -8° C, puis que l'on transforme lesdits boudins en une masse de composition glacée incorporant lesdites inclusions réparties de manière aléatoire dans la masse de composition glacée.

Dans le procédé de l'invention, il importe que la composition glacée soit extrudable à très basse température et dissipe l'énergie qu'elle a enmagasiné sous forme de frigories dès sa sortie de la filière d'extrusion, de sorte que l'on puisse mettre en forme le boudin co-extrudé sortant. On peut le faire, par exemple en réalisant un enroulement ou un repliement du boudin sur lui-même au moyen d'une buse de co-extrusion mobile, délivrant un boudin enroulé ou replié en continu à la sortie de la filière, que l'on peut ensuite découper en portions ou en remplissant un contenant au moyen d'une buse de co-extrusion statique, de manière discontinue. Un tel contenant peut être un pot, un cornet, une barquette de portion familliale ou "vrac" ou encore a moule à sucette glacée. Dans ce mode de réalisation de remplissage d'un contenant, on peut prévoir que la buse de co-extrusion soit animée d'a mouvement de monte et baisse, par exemple de manière à descendre à un niveau proche du fond du contenant, puis à remonter au fur et à mesure du dosage du boudin. Pendant cette opération, le contenant peut rester immobile ou en variante, la buse peut rester immobile et le contenant descendre lors du remplissage. Lorsque la buse est mobile, on peut prévoir qu'elle soit reliée à l'extrudeur par a raccord souple.

Concrètement, le boudin possède une certaine plasticité pendant un certain laps de temps, par exemple de l'ordre d'environ 10 s. Il est remarquable que, selon l'invention, les propriétés rhéologiques du fourrage ne jouent pas un rôle déterminant dans la réalisation de la co-extrusion. Ainsi, il est possible de fabriquer un boudin composite et de le former, notamment dans un contenant, sans prendre de précautions particulières en ce qui concerne les propriétés physiques, en particulier la viscosité et la densité du fourrage, relativement à celles de la composition glacée, car l'état de la composition glacée entourant le fourrage pourvoit à la stabilité des inclusions. Aussi, le procédé de l'invention permet une grande variation dans le choix et la nature des fourrages.

En principe, tout procédé permettant l'extrusion de composition glacée à très basse température est applicable. On préfère utiliser un appareil d'extrusion mono-vis ou bi-vis, dans lequel on réalise le refroidissement et l'incorporation d'air dans un seul appareil.

Selon un mode de réalisation préféré du procédé, on fait passer la matière première constituant la composition à glacer dans un dispositif muni de deux vis sans fin, parallèles, tournant dans le même sens.

Selon un mode de réalisation particulier, on injecte un gaz, par exemple de l'air, dans le fourreau en quantité telle que l'on obtienne 20 à 150 % et de préférence 80 à 100 % de foisonnement.

Pour mettre en oeuvre le procédé, on prépare de manière conventionnelle une composition pour crème glacée, crème glacée allégée en matière grasse ou sorbet à base, selon la recette, de lait, lait écrémé, crème, lait concentré, poudre de lait, huile de beurre à laquelle on ajoute du saccharose, glucose, dextrose de fruits, pulpe de fruits ou de légume et des hydrocolloides stabilisants comme, par exemple, les carraghénates, alginates, la gomme de caroube, des émulsifiants comme, par exemple, les glycérides partiels et des arômes. Après mélange intime des ingrédients dans les proportions dictées par la recette, on pasteurise, refroidit, puis, le cas échéant on peut homogénéiser, de préférence à chaud dans des conditions poussées permettant une réduction de la taille moyenne des globules gras autour de 8-20 micron. Après refroidissement de l'homogénéisat à basse température, proche de 0° C, on peut laisser la composition mûrir un certain temps à cette température. L'homogénéisation et la maturation sont des étapes optionnelles.

Cette masse, le cas échéant homogénéisée et mûrie est désignée dans la suite de l'exposé par "masse à glacer". Elle est introduite, de préférence à environ 2-5° C dans un dispositif de congélation bi-vis qui sera décrit ci-après plus en détails, dans lequel elle est malaxée par les vis co-rotatives tournant à vitesse élevée, préférablement à 100-600 tour/min, acheminée vers une zône d'injection d'air où elle est foisonnée à 20-150 %, fortement refroidie, jusqu'à -8 à -20° C, puis forcée à travers une filière.

Le travail dans le dispositif bi-vis s'effectue de manière surprenante sans cisaillement excessif, de sorte que la montée en pression n'excède pas environ 50 bar au niveau de la filière. Le produit sortant est caractérisé par un diamètre moyen des cristaux de glace allant de 10 à 30 micron, ce qui est notablement plus bas que ce que l'on peut obtenir avec les freezers conventionnels, ainsi que par une taille moyenne des globules gras autour de 8-20 micron. Il en résulte une texture améliorée dans le sens d'une meilleure onctuosité et d'une meilleure crémosité.

Le fourrage est injecté au coeur de la veine de composition glacée sortant de l'extrudeur au moyen d'une buse de co-extrusion à la sortie du fourreau de l'extrudeur à vis, buse qui comme indiqué précédemment, peut être mobile ou statique.

Un dispositif pour la mise en oeuvre du procédé est illustré au dessin annexé, donné à titre d'exemple non limitatif, dont
la figure 1 est une vue schématique en perspective éclatée du dispositif,
la figure 2 est une coupe schématique d'une buse statique de co-extrusion,
la figure 3 est une représentation schématique du procédé de remplissage d'un contenant et
la figure 4 représente une tranche d'un produit co-extrudé, démoulé du contenant et tranché, disposée sur une feuille de support.

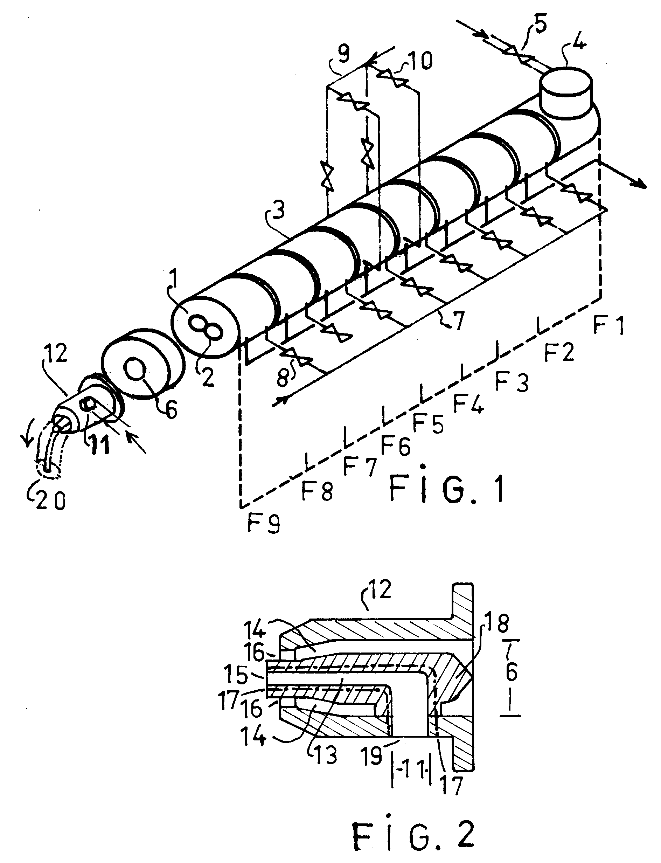

A la figure 1, le dispositif comprend deux vis sans fin, 1 et 2 identiques et parallèles s'engrenant l'une dans l'autre et tournant dans le même sens, entrainées par un moteur non représenté. Les vis 1 et 2 sont placées dans un fourreau 3, qui présente à l'une de ses extrémités un conduit d'alimentation 4 en mélange à congeler pourvu d'une vanne de non retour 5 pour assurer l'étanchéité vis à vis de l'air et à l'autre d'une filière 6 sous forme de plaque.

Le cas échéant, dans une zone intermédiaire, le dispositif comporte des moyens d'alimentation en air.

Les deux vis sans fin peuvent présenter des segments F1 à F9 successifs où la forme des vis varie d'un segment à l'autre, par exemple du point de vue de l'orientation des filets et de leur pas. La configuration des vis est disposée pour effectuer les opérations de transport, mélange, cisaillement et compression de la masse vers la filière et pour favoriser, le cas échéant, l'incorporation de gaz de manière à obtenir un bon foisonnement. On peut prévoir des zones intermédiaires de brassage, par exemple par des disques monolobes ou bilobes à orientation positive, ayant un effet de transport ou négative, ayant un effet de retour ou encore un segment à pas de vis inverse induisant un retour.

Le fourreau 3 est pourvu de moyens de refroidissement constitués d'une double enveloppe où circulent des fluides frigorigènes.

Les moyens de refroidissement comportent, de préférence, un circuit de refroidissement autonome 7 par segment, avec vannes 8 de contrôle du débit d'agent frigorigène, par exemple un mélange eau-alcool, ce qui permet une régulation individuelle de chaque segment en température. Les vis peuvent également être refroidies de manière contrôlée, par exemple au moyen d'un circuit de fluide frigorigène qui peut être contrôlé de manière autonome.

Le gaz, par exemple l'air, peut être injecté au moyen de débimètres par des conduits 9 à différents niveaux du fourreau 3, et de préférence dans la seconde moitié de sa longueur, préférablement de chaque côté de celui-ci. Le débit d'air peut être réglé individuellement par des vannes 10. On peut atteindre ainsi, de préférence, 80 à 150 % de foisonnement.

La filière est, de préférence, en forme d'un contre-cône, dont le rôle est de réunir les espaces entourant chaque vis en un seul orifice de sortie. Elle peut être à sortie horizontale, verticale ou inclinée. La géométrie et le dimensionnement de la filière ou, le cas échéant, le diamètre et la longueur du conduit de sortie qui peut lui être associé sont prévus pour assurer une contre-pression de l'ordre de 4 à 50 bar et, de préférence de 4 à 25 bar. La contre-pression est assurée par la géométrie du passage de la composition glacée dans la buse de co-extrusion, par exemple, dans le cas d'une température de sortie du produit proche de la limite basse, auquel cas le diamètre utile du passage de sortie doit être augmenté pour compenser la chute de pression due à la perte de charge provoquée par l'augmentation de la viscosité lorsque la température de la masse baisse. La filière peut, de préférence, être refroidie, par exemple au moyen d'un manchon où circule un fluide de refroidissement.

A la sortie de la filière 6, le fourrage est injecté, au moyen d'une pompe non représentée, par le conduit 11 au coeur de la veine de composition glacée sortant de l'extrudeur au moyen de la buse 12 de co-extrusion disposée à la sortie du fourreau de l'extrudeur à vis, buse qui comme indiqué précédemment, peut être mobile ou statique. Il s'agit de former un tube creux de composition glacée dans lequel on injecte à l'aide de la pompe un élément de fourrage. Le principe consiste à pousser la masse de composition glacée autour d'un élément déflecteur en forme de pointeau dans lequel est inséré un passage pour le fourrage.

A la figure 2, la buse 12, appliquée sur la filière 6, comprend un passage central 13 pour le fourrage, relié au conduit 11 et un passage annulaire 14 pour la composition glacée sortant de la filière 6. Cette buse délivre un boudin co-extrudé de fourrage central entouré d'une gaine de composition glacée, dont la forme peut être variée en fonction de la configuration des sections des orifices de sortie respectives 15 et 16. On peut prévoir, en fonction de la nature du fourrage, par exemple s'il s'agit d'une composition grasse, la présence d'une isolation thermique telle que 17, par exemple par un matériau isolant ou par une chambre annulaire reliée au vide, dans le corps 18 de la buse et autour de la partie d'entrée 19 du passage 13.

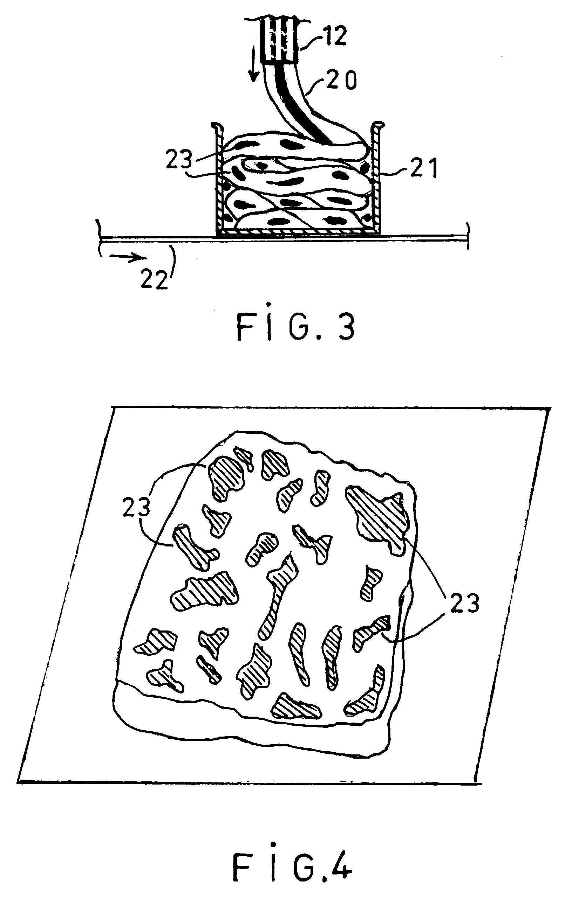

Comme montré à la figure 3, le boudin composite 20 issu de la buse 12 de co-extrusion est dosé dans une barquette 21, transportée par un convoyeur 22 cheminant pas à pas se présentant sous la buse. Le boudin composite 20, de consistance encore plastique, se replie alors sur lui-même en couches successives et le fourrage se distribue de manière aléatoire dans les espaces créés entre les couches lorsqu'elles occupent le volume délimité par la barquette dans laquelle la masse de composition glacée est confinée. On réalise ainsi des inclusions stables telles que 23, solides ou liquides, maintenues en place du fait de l'état physique particulier de la masse de composition glacée. En particulier, il est remarquable qu'il n'y ait pas de migration ni d'accumulation des inclusions par gravité au fond du contenant.

Le procédé selon l'invention est décrit plus en détails dans les exemples ci-après donnés à titre d'illustration. Les pourcentages y sont en poids, sauf indication contraire.

### Exemple 1

### 1) Masse de composition glacée

On a préparé une composition à glacer de bas point de congélation contenant 2 % de graisse lactique (sous forme de crème à 35 % de matière grasse), 12,5 % de solides non gras du lait, 13,5 % de saccharose, 5 % de sirop de glucose (d'équivalent dextrose 38-42), 3 % de maltodextrine (d'équivalent dextrose 15-18), 0,6 % de glycérides partiels à titre de stabilisants/émulsifiants et 0,4 % d'arôme de vanille. La teneur en solides totaux de la composition était 33 %, le solde étant représenté par l'eau. Le mélange a subi une homogénéisation en deux étages à 135, puis 35 bar, a été pasteurisé à 86° C pendant 30 s, refroidi à 4° C et entreposé 24 h à cette température. Cette composition a été introduite dans le dispositif d'extrusion dans les conditions opératoires indiquées ci-après:
- Configuration des vis 1 et 2

| | | | | | | | | | |
|---|---|---|---|---|---|---|---|---|---|
| Segments | F1 | F2 | F3 | F4 | F5 | F6 | F7 | F8 | F9 |
| Type de vis | T | T/M | T/M | M/C | T | CO | M/CO | M/CO | CO |
| Avec T: Transport, M: Mélange, C: Cisaillement et CO: Compression | | | | | | | | | |

- Débit de produit entrant 8 kg/h.
- Injection d'air: en 9 des deux côtés dans F5 et F6, soit par 4 conduits avec un débit de 15 g/h.
- Vitesse de rotation des vis: 300 t/min.
- Refroidissement des zones F2 à F9 avec un liquide frigorigène à -30/-35° C, le profil de température étant F1-F3, -14° C/ F4-F8, -20° C/ F9, -23° C.
- Diamètre extérieur de la filière: 9 mm.

La température de sortie du produit était -9,5° C et le foisonnement 90 %.

### 2) Liquide de fourrage

On a dilué du cacao instantanéisé contenant du saccharose (Nesquik (R)) dans du lait écrémé à raison de 1,5 kg de cacao pour 11 de lait écrémé. On a introduit ce liquide avec un débit de 1,5 kg/h dans le conduit 11 de la buse de co-extrusion, de 4 mm de diamètre.

### 3) Produit composite obtenu

Après remplissage d'une barquette de vrac, on n'a pas pu distinguer la forme du boudin co-extrudé. L'aspect de surface du produit était semblable à celui d'une crème glacée standard. Après démoulage et découpe, on a observé des inclusions telles que 23, figure 4, très régulièrement réparties dans la masse de crème glacée qui, au bout de quelques minutes à la température ambiante, s'écoulaient lentement pour donner une sorte de nappage. La crème glacée à basse teneur en matière grasse avait une texture très crémeuse.

### Exemples 2-3

On a procédé comme à l'exemple 1, mais avec un fourrage de masse de cacao/chocolat de composition indiquée ci-après:

### Exemple 2: fourrage de cacao à 63 % de matière sèche

| **Ingrédient** | **%** |
|---|---|
| Saccharose cristallisé | 35 |
| Sirop de glucose déshydraté | 16 |
| Pâte de cacao noir | 10 |
| Poudre de cacao noir | 2 |
| Gélifiant | 0,55 |
| Eau | 36,45 |

### Exemple 3: fourrage de chocolat à 80 % de matière sèche

| **Ingrédient** | **%** |
|---|---|
| Chocolat en poudre | 30,5 |
| Sirop de glucose, sucre inverti, graisse végétale hydrogénée, sel, arôme vanilline | 49,5 |
| Eau | 20 |

### Exemple 4

On a procédé comme à l'exemple 1, mais avec un fourrage de masse de caramel constituée d'un sirop de sucre caramélisé contenant 76 % de matière sèche.

Le fourrage était légèrement coulant lors de la découpe.

### Exemple 5

On a procédé comme à l'exemple 1, mais avec un fourrage de masse de pur jus de myrtilles concentré à 63 % de matière sèche.
Le fourrage était coulant lors de la découpe, ce qui donnait un nappage régulier de la crème glacée.

### Exemples 6-9

On a procédé comme à l'exemple 1, mais avec un fourrage de masse de purée de fruits de composition indiquée ci-après:

### Exemple 6: fourrage de mangue à 55 % de matière sèche

| **Ingrédient** | **%** |
|---|---|
| Saccharose cristallisé | 48,9 |
| Pulpe de mangue | 30 |
| Jus de citron | 1 |
| Pectine | 0,77 |
| Eau | 19,33 |

### Exemple 7: fourrage de groseille à 64,4 % de matière sèche

| **Ingrédient** | **%** |
|---|---|
| Sirop de glucose déshydraté | 52,7 |
| Purée de groseille | 35 |
| Dextrose cérélose (équivalent dextrose 100) | 12 |
| Jus de citron | 0,3 |

### Exemple 8: fourrage d'abricot à 30-50 % de matière sèche

| **Ingrédient** | **%** |
|---|---|
| Saccharose | 10 |
| Purée d'abricot, | 90 |
| sirop de glucose, | |
| gélifiant (pectine de fruit), | |
| arômes, | |
| acide malique | |

### Exemple 9: fourrage de châtaigne à 30-50 % de matière sèche

Pour rendre le fourrage pompable, on a mélangé de la purée de châtaigne avec du lait écrémé à raison de 1kg de purée pour 0,5 dl de lait.

Les inclusions obtenues sont restées solides lors de la découpe en tranche, donnant ainsi l'illusion de morceaux de fruits.

### Exemples 10-12

On a procédé comme à l'exemple 1, mais avec un sorbet au légume à titre de composition glacée et un fourrage à base de légume, qui peut être le même ou différent, avec la composition du fourrage indiquée ci-après:

### Exemple 10: fourrage de légume à 30 % de matière sèche

| **Ingrédient** | **%** |
|---|---|
| Pulpe de légume (avocat, carotte) | 50 |
| Saccharose cristallisé | 17 |
| Stabilisant microbiologique | 0,3 |
| Jus de citron | 1,7 |
| Poivre | 1 |
| Sel | 1 |
| Eau | 30 |

### Exemple 11: fourrage de tomate à 28 % de matière sèche

| **Ingrédient** | **%** |
|---|---|
| Purée de tomate | 45 |
| Dextrose cérélose (équivalent dextrose 100) | 5 |
| Polydextrose | 10 |
| Saccharose cristallisé | 3 |
| Sirop de glucose | 10 |
| Stabilisant microbiologique | 0,4 |
| Jus de citron | 0,6 |
| Arôme | 0,05 |
| Colorant | 0,01 |
| Eau | 25,04 |

### Exemple 12: fourrage de melon à 28,7 % de matière sèche

| **Ingrédient** | **%** |
|---|---|
| Purée de melon | 45 |
| Saccharose liquide | 14,7 |
| Sirop de glucose | 6,3 |
| Sucre inverti 2/3 | 5,5 |
| Arôme | 2 |
| Gélatine | 0,4 |
| Gomme de caroube | 0,15 |
| Colorant | 0,005 |
| Eau | 25,95 |

Dans les exemples précédents, on a décrit le procédé et l'appareil en rapport avec la fabrication de composition glacée sans spécifier que l'on pourrait traiter en même temps plusieurs crèmes glacées ou sorbets de parfums et couleurs différents, par co-extrusion et obtenir ainsi des produits composites, par exemple marbrés, contenant des inclusions.

Bien entendu, le procédé est applicable à la fabrication de produits congelés du genre des mousses, crèmes et pâtes à tartiner sucrées ou encore salées, par exemple de fromage, légume, viande ou poisson ou des sauces culinaires ou sauces à salade. Dans ces cas, la flexibilité du procédé permet de moduler l'incorporation d'air dans la composition à glacer en fonction du degré de foisonnement plus ou moins grand souhaité en apport avec les caractéristiques des types de produits visés.

## Revendications

1. Article de confiserie glacée composite comprenant des inclusions distinctes de fourrage dans la masse d'une composition glacée, caractérisé par le fait qu'il comprend une masse de composition glacée et un fourrage sous forme d'inclusions stabilisées et réparties de manière aléatoire dans ladite masse de composition glacée et que les inclusions proviennent de la co-extrusion d'un fourrage central liquide pompable et d'une composition glacée extrudable à une température inférieure ou égale à -8° C.

2. Article selon la revendication 1, caractérisé par le fait que la composition glacée est une crème glacée ou un sorbet, plus ou moins aéré ou foisonné ou encore une mousse culinaire glacée, plus ou moins foisonnée et que le fourrage est constitué d'une composition aqueuse ou grasse, dont la teneur en matière sèche est notamment 28 à 80 % en poids, contenant un sucre.

3. Article selon la revendication 2, caractérisé par le fait que le fourrage contient comme sucre du saccharose cristallisé, des polysaccharides, notamment un sirop de glucose, du sucre cuit, du sucre inverti, une maltodextrine, notamment à équivalent dextrose élevé.

4. Article selon la revendication 1, caractérisé par le fait que le fourrage est du miel, du caramel, de la purée de fruit ou de la purée de légume.

5. Article selon la revendication 1, caractérisé par le fait que le fourrage est constitué d'une purée de fruit ou de légume, notamment sans additif ou contenant une quantité minimale, bien inférieure à ce qui est utilisé habituellement, d'un gélifiant ou épaississant, notamment une gomme, une pectine ou une gélatine.

6. Article selon la revendication 1, caractérisé par le fait que le fourrage contient des arômes, notamment de chocolat, de café, de fruits et le cas échéant des agents conservateurs.

7. Article selon la revendication 1, caractérisé par le fait que le fourrage contient des petites inclusions, notamment des éclats de chocolat ou de fruits secs.

8. Article selon la revendication 1, caractérisé par le fait qu'il se présente sous la forme d'un fondant ou d'une pâte de composition grasse, le cas échéant aérée, notamment une mousse au fruit ou au chocolat.

9. Article selon l'une des revendications 1 à 8, caractérisé par le fait qu'il se présente sous forme d'une barquette, d'un pot, d'une sucette ou d'un cornet.

10. Procédé de fabrication de composition glacée contenant des inclusions, caractérisé par le fait que l'on forme des boudins de fourrage central entourés d'un manchon de composition glacée par co-extrusion à une température de composition glacée inférieure ou égale à -8° C, puis que l'on transforme lesdits boudins en une masse de composition glacée incorporant lesdites inclusions réparties de manière aléatoire dans la masse de composition glacée.

11. Procédé selon la revendication 10, caractérisé par le fait que, pour préparer la composition glacée, on mélange, on aére, on congèle, on refroidit une composition à glacer jusqu'à une température égale ou inférieure à -8° C et on la fait passer à travers une filière, que ces opérations ont lieu en une seule étape dans un dispositif unique constitué de deux vis sans fin, parallèles, tournant dans le même sens en s'engrenant l'une dans l'autre et situées dans un fourreau muni de moyens d'aération et de refroidissement. mettre en forme le boudin co-extrudé sortant.

12. Procédé selon la revendication 10, caractérisé par le fait que l'on réalise un enroulement ou un repliement du boudin sur lui-même au moyen d'une buse de co-extrusion mobile, délivrant un boudin enroulé ou replié en continu à la sortie de la filière ou en remplissant un contenant au moyen d'une buse de co-extrusion statique, de manière discontinue.
